# EUROPEAN PATENT APPLICATION

(11) **EP 2 437 145 A1**
(43) Date of publication of application: **04.04.2012**
(21) Application number: 10177455.2
(22) Date of filing: 17.09.2010
(51) Int. Cl.: G06F 3/042, G06F 3/041

(54) **TOUCH-SENSITIVE DISPLAY WITH DEPRESSION DETECTION AND METHOD**

(71) Applicant: RESEARCH IN MOTION LIMITED, Waterloo, Ontario N2L 3W8 (CA)
(72) Inventor: Pemberton-Pigott, Nigel Patrick, Waterloo Ontario N2L 3L3 (CA)
(74) Representative: Roberts, Gwilym Vaughan

(57) **Abstract**

A device includes a touch-sensitive display having a first location associated with a first threshold and a second location associated with a second threshold. A sensor is configured to detect depression of the touch-sensitive display by detecting a force exerted at a location on the touch-sensitive display The force exerted effects a characteristic of an optical signal. The characteristic is compared to the first threshold when the force is exerted in the first location, and the characteristic is compared to the second threshold when the force is exerted in the second location.

## Description

### Field of Technology

The present disclosure relates to electronic devices including, but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in devices with touch-sensitive displays are desirable.

### Brief Description of the Drawings

FIG. 1 is a block diagram of a portable electronic device in accordance with the disclosure.

FIG. 2 is a sectional side view of a portable electronic device with a mechanical actuator in accordance with the disclosure.

FIG. 3 is a sectional side view of a portable electronic device with a depressed mechanical actuator in accordance with the disclosure.

FIG. 4 is a sectional side view of a portable electronic device with piezoelectric actuators in accordance with the disclosure.

FIG. 5 is a sectional side view of a portable electronic device when a touch-sensitive display is not depressed in accordance with the disclosure.

FIG. 6 is a side view of a portable electronic device when a touch-sensitive display is depressed in a first location in accordance with the disclosure.

FIG. 7 is a side view of a portable electronic device when a touch-sensitive display is depressed in second location in accordance with the disclosure.

FIG. 8 illustrates relative timing of optical signals at the detector of FIG. 5.

FIG. 9 is a flowchart illustrating methods related to detecting force on, or depression of, the touch-sensitive display in accordance with the disclosure.

FIG. 10 is a side view of an alternate configuration to detect when the touch-sensitive display is depressed.

FIG. 11 illustrates relative amplitudes of optical signals at the detector of FIG. 9 in accordance with the disclosure.

FIG. 12 is a flowchart illustrating a method of detecting force on, or depression of, the touch-sensitive display in accordance with the disclosure.

### Detailed Description

The following describes apparatus for and method of detecting force exerted on, or depression of, a touch-sensitive display of, for example, a portable electronic device. When a sufficient or threshold force exerted on a movable touch-sensitive display of a portable electronic device is detected, a selection of a displayed selection options occurs.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

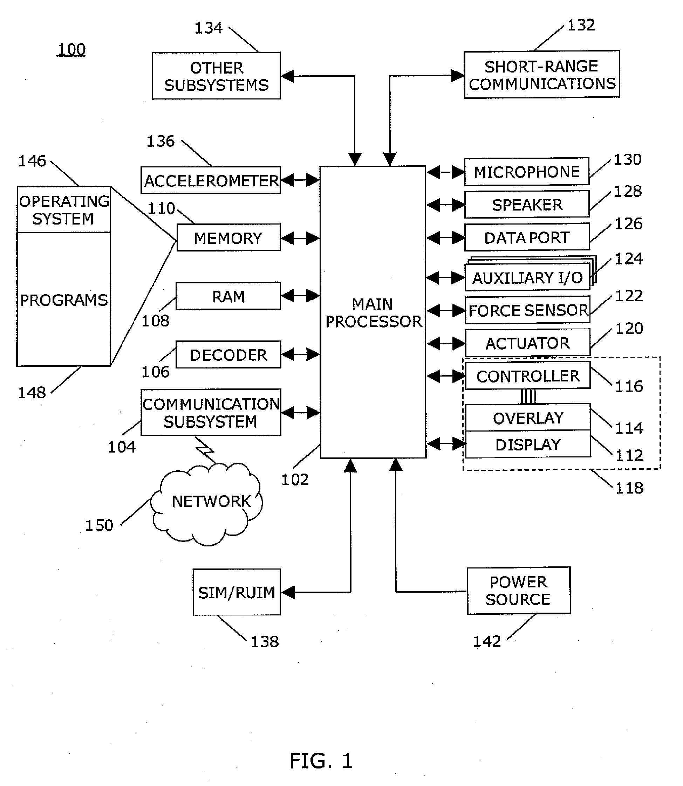

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator(s) 120 may be depressed by applying sufficient force to the touch-sensitive display 118 to overcome the actuation force of the actuator 120. Force as utilized throughout the specifcation, including the claims, refers to force measurements, estimates, and/or calculations, such as pressure, deformation, stress, strain, force density, force-area relationships, thrust, torque, and other effects that include force or related quantities. The actuator 120 may be actuated by pressing anywhere on the touch-sensitive display 118. The actuator 120 may provide input to the processor 102 when actuated. Actuation of the actuator 120 may result in provision of tactile feedback. When force is applied, the touch-sensitive display 118 is depressible, pivotable, and/or movable. The actuator may be any suitable actuator, including mechanical and/or electrical actuators.

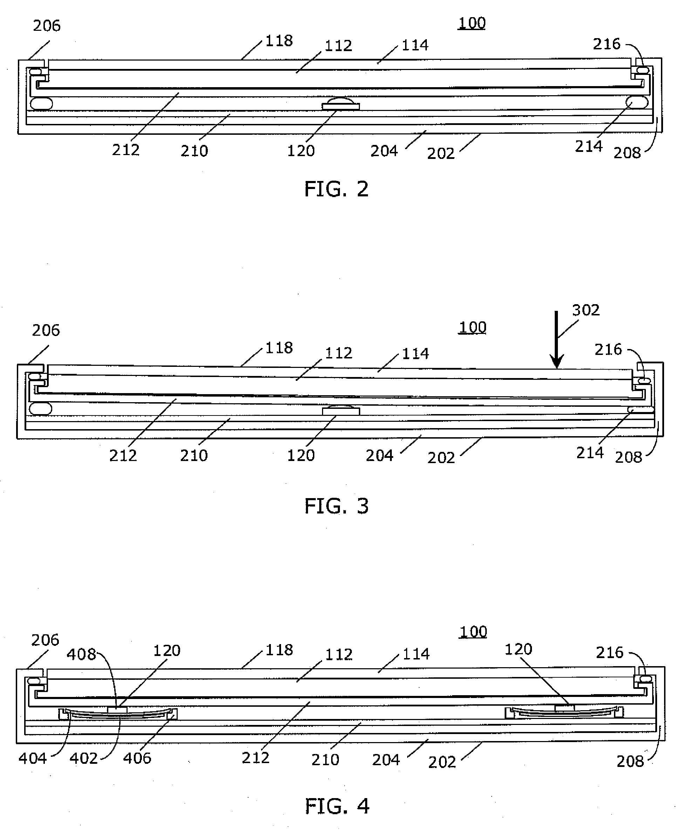

A sectional side view of a portable electronic device 100 with a mechanical actuator 120 is shown in FIG. 2. The cross section is taken through the center of the actuator 120. The portable electronic device 100 includes a housing 202 that encloses components such as shown in FIG. 1. The housing 202 may include a back 204, a frame 206, and sidewalls 208 that extend between the back 204 and the frame 206. A base 210 extends between the sidewalls 208, generally parallel to the back 204, and supports the actuator 120. In the example of FIG. 2, a mechanical dome switch actuator is utilized. The touch-sensitive display 118 may be supported on a support tray 212 of suitable material, such as magnesium, and the support tray 212 may be biased away from the base 210 toward the frame 206 by biasing elements 214, such as gel pads or springs, between the support tray 212 and the base 210. Compliant or compressible spacers 216, which may be, for example, gel pads or springs, may be located between the support tray 212 and the frame 206.

The touch-sensitive display 118 is moveable and depressible with respect to the housing 202, and in this example is shown floating with respect to the housing 202, i.e., not fastened to the housing 202. Alternatively, the touch-sensitive display 118 may be fastened to the housing 202 or base 210, provided the touch-sensitive display 118 is able to move relative to the housing 202 sufficient for measurement of optical signals described below. As the touch-sensitive display 118 is moved toward the base 210, the biasing elements 214 are compressed, and when sufficient force is applied, the actuator 120 is depressed or actuated as shown in FIG. 3. The touch-sensitive display 118 may also pivot within the housing to depress the actuator 120. A force 302 applied to one side of the touch-sensitive display 118 moves the display 118 toward the base 210, causing compression of the biasing elements 214 on that side of the touch-sensitive display 118 and depressing the actuator 120. The actuator 120 may be actuated by pressing anywhere on the touch-sensitive display 118. The processor 102 receives a signal when the actuator 120 is depressed or actuated, which signal may trigger a selection or other input to the portable electronic device 100. For a mechanical dome switch/actuator, tactile feedback is provided when the dome collapses due to imparted force and when the dome switch/actuator returns to the rest position after release of the switch. Although a single actuator is shown, any suitable number of actuators may be utilized and may be located in any suitable position(s).

A sectional side view of a portable electronic device with piezoelectric (piezo) actuators is shown in FIG. 4. The actuator 120 may comprise one or more piezo devices 402 that provide tactile feedback for the touch-sensitive display 118. Four piezo devices 402 are utilized in this example, one disposed near each corner of the device 100. The cross-section of FIG. 4 is taken through the centers of two of the four piezo devices 402 utilized in this example. The piezo devices 402 may be disposed between the base 210 and the support tray 212. Each piezo actuator 120 includes a piezoelectric device, such as a piezoelectric ceramic disk 402 adhered to a substrate 404. The substrate 404 is elastically deformable, and may be comprised of metal, such that the substrate 404 bends when the piezo device 402 contracts, e.g., diametrically. The piezo device 402 may contract, for example, as a result of build-up of charge/voltage at the piezo device 402 or in response to a force, such as an external force applied to the touch-sensitive display 118. Each substrate 404 and piezo device 402 may be suspended from a support, such as a ring-shaped frame 406, for supporting the piezo device 402 while permitting flexing of the piezo actuator 120 as shown in FIG. 4. The support rings 406 may be disposed on the base 210 or may be part of the base 210, which may be a printed circuit board in a fixed relation to at least a part of the housing 202. Optionally, the substrate 404 may be mounted on a flat surface, such as the base 210. An element 408, which may be comprised of a suitable material such as a hard rubber, silicone, polyester, and/or polycarbonate, may be disposed between the piezo actuator 402 and the touch-sensitive display 118. This element 408 may provide a bumper or cushion for the piezo actuator 120 as well as facilitate actuation of the piezo actuator and/or one or more force sensors 122 that may be disposed between the piezo actuators 120 and the touch-sensitive display 118. The element 408 does not substantially affect the tactile feedback provided to the touch-sensitive display 118. As the touch-sensitive display 118 is moved toward the base 210, when sufficient force is applied, the actuator 120 of FIG. 4 is depressed or actuated. The processor 102 receives a signal when the actuator 120 is depressed or actuated, which signal may trigger a selection of a displayed selection option or other input to the portable electronic device 100.

Contraction of the piezo actuators 120 applies a spring-like force, for example, opposing a force externally applied to the touch-sensitive display 118 or providing tactile feedback in response to another event, such as an incoming call or other situation that results in provision of tactile feedback. The charge/voltage may be adjusted by varying the applied voltage or current, thereby controlling the force applied by the piezo devices 402. The charge/voltage across the piezo actuator 120 may be removed or reduced, for example, by a controlled discharge current that causes the piezo device 402 to expand, releasing or decreasing the force applied by the piezo device 402. The charge/voltage may advantageously be reduced over a relatively short period of time to provide tactile feedback to the user via the touch-sensitive display 118. Absent an external force and absent a charge/voltage across the piezo device 402, the piezo device 402 may be slightly bent due to a mechanical preload.

The processor 102, or a separate processor or controller, may be operably connected to one or more drivers that control the voltage/current/charge across the piezo devices 402, which controls the force applied by the piezo actuators 120 on the touch-sensitive display 118. Each of the piezoelectric devices 402 may be controlled substantially equally and concurrently. Optionally, the piezoelectric devices 402 may be controlled separately. The piezo actuators 120 may be controlled to impart a force on the touch-sensitive display as tactile feedback, for example, to simulate collapse or release of a dome switch. The piezo actuators 120 may be controlled to provide other tactile feedback, for example, a vibration to notify of an incoming call or text message. The depression sensor comprising one or more optical devices as described below may alternatively or additionally provide the signal that triggers selection of a displayed selection option or other input to the electronic device 100, and may optionally trigger provision of tactile feedback by the piezo actuators 120.

Force information related to a detected touch on the touch-sensitive display 118 may be utilized to highlight information, such as information associated with a location of a touch, e.g., displayed selection options. For example, a touch that does not meet a force threshold may highlight a selection option shown on the touch-sensitive display 118, whereas a touch that meets a force threshold may select or input that selection option. Meeting the force threshold also includes exceeding the force threshold. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming. When a force imparted or exerted on the touch-sensitive display 118 moves the touch-sensitive display 118 or creates a threshold amount of distortion, e.g., bending or flexing, of the display, depression is detected. The depression results in selection, also referred to as confirmation of selection, of a selection option displayed on the touch-sensitive display 118. Tactile feedback by an actuator 120 or other mechanism may be provided to indicate selection.

When a force that meets the force threshold is imparted or exerted on the touch-sensitive display 118, depression occurs. A force that meets the force threshold equals or exceeds the force threshold. Depression of the touch-sensitive display 118 signifies selection, also referred to as confirmation of selection, of a selection option displayed on the touch-sensitive display 118. The selection option is typically associated with a touch location. Tactile feedback by an actuator 120 or other mechanism, visual feedback, audible feedback, and/or other feedback may optionally be provided to indicate selection, which feedback may be triggered by the depression. Indication of selection of a selection option includes any visible, audible, or other indicator that selection has occurred, such as entry of a character in a data field, performance of a function such as playing a song on a music player, opening of an application, sending an email, and so forth. Utilizing a force threshold reduces the occurrence of unintended selection, for example, due to inadvertent, careless, or erroneous touches. The force threshold, for example, addresses any force imparted on the touch-sensitive display 118 that overcomes any biasing force, compression force, moves the display an established distance, and/or any other force on the touch-sensitive display 118 prior to depression of the touch-sensitive display 118. For example, the force threshold may be established to overcome at least the biasing forces and/or the force to actuate the actuator 120 of FIG. 3. Alternatively, the force may be a force utilized in conjunction with the piezo actuator 120 of FIG. 4. The force or other action that depresses the touch-sensitive display may be detected by the actuator 120, such as described in various embodiments above, or by another type of sensor, such as the optical depression sensor described herein. Thus, the optical depression sensor acts as a force sensor. Detection of a force that results in depression of the touch-sensitive display 118 may be established based on movement, compression, or flexing of the touch-sensitive display 118 that causes an identifiable effect on an optical signal. The effect may relate to phase, amplitude, reflection including a reflection characteristic, and/or any other characteristic of the optical signal and/or any change in phase, amplitude, reflection including a reflection characteristic, and/or any other characteristic of the optical signal. The optical depression sensor is configured to detect the effect. The depression sensors of any figure may be a form of actuator 120 and/or force sensor 122.

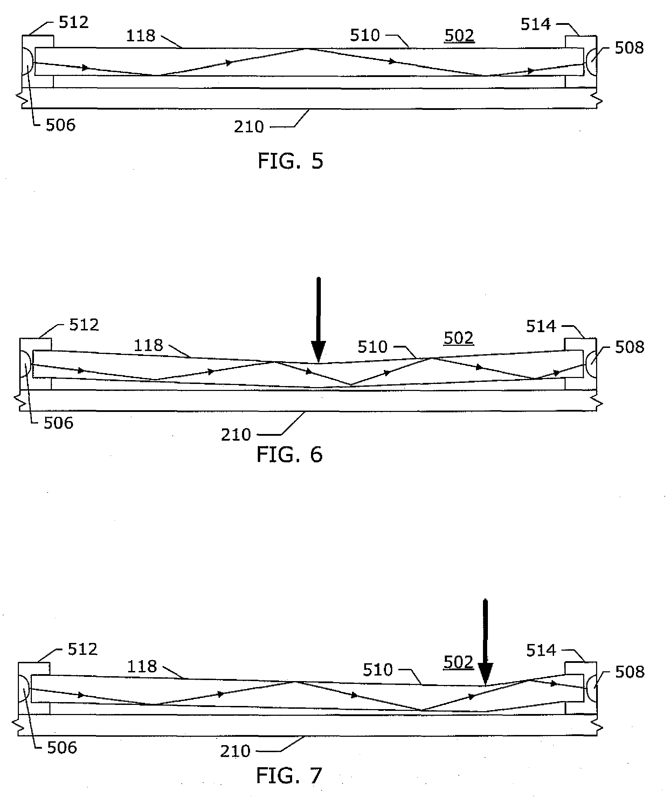

As shown in the cross-sectional views in the example of FIG. 5, FIG. 6, and FIG. 7 the depression sensor 502 includes an optical emitter 506 and an optical detector 508. The optical emitters may include optical components such as semiconductor emitters, laser or infra-red emitters, fiber optic couplers, and so forth. An optical carrier 510 provides an optical path through which optical signals are carried or transmitted. The optical carrier 510 comprises, for example, the touch-sensitive display 118 or portions of the touch-sensitive display 118 such as the display 112 and/or the touch-sensitive overlay 114, air, or other suitable optical material. Supports 512 and 514 that support the optical emitter 506 and the optical detector 508, respectively, are coupled to the optical carrier 510 and the optical carrier 510 is located between the optical emitter 506 and the optical detector 508. Although only one optical emitter 506 and one optical detector 508 are shown in FIG. 5, FIG. 6, and FIG. 7 several optical emitters 506 and optical detectors 508 may be utilized. The depression sensor 502 may replace the mechanical actuator 120 of FIG. 2 or the piezo actuators 120 of FIG. 4. Alternatively, the mechanical actuator 120 of FIG. 2 or the piezo actuators 120 of FIG. 4 may be utilized in addition to the depression sensor 502.

As shown in FIG. 5, when the touch-sensitive display 118 is not depressed, the optical carrier 510 has a length that is effectively the distance from the optical emitter 506 to the optical detector 508. In one example, the length between the optical emitter 506 and the optical detector 508 is an integral number of wavelengths of the optical signal output from the optical emitter 506. When the touch-sensitive display 118 is depressed, for example, due to a force represented by the arrows in FIG. 6 and FIG. 7, the optical carrier 510 bends. Bending of the optical carrier 510 changes the optical path through the optical carrier 510, thereby changing the timing or phase of the optical signal received at the optical detector 508. Thus, the optical signal from the optical emitter 506 may affected in a measurable way by the bending of the optical carrier 510. The changes to the optical path may include either lengthening or shortening of the optical path. The bending shown in FIG. 6 and FIG. 7 is exaggerated for ease of representation.

The flexibility of the optical carrier 510 in response to a touch varies based distance between the touch and the supports 512, 514. For example, the optical carrier 510 is less flexible near the supports 512, 514 and more flexible away from the supports 512, 514. For example, as shown in FIG. 6 and FIG. 7, a force shown at an arrow located substantially equidistant from the supports 510, 512 causes the optical carrier to flex to a greater degree than that same force applied closer to the supports 510, 512. As described, the different degrees of flexibility of the optical carrier 510 based on the location at which a force applied to the optical carrier 510 are accommodated by having different thresholds to which changes in optical signals traversing the optical path are compared. The different thresholds may be selected for use based on the location at which a touch is detected. For example, if a touch is detected in a section or at a location and a phase difference is used to detect force, a selected phase difference threshold is used to determine whether force is applied to the touch-sensitive display 118 based on the location at which the touch-sensitive display 118 is touched. For example, a touch detected near the arrow of FIG. 6 may have a first phase difference threshold and a touch detected near the arrow of FIG. 7 may have a second, lower phase difference threshold. In this manner, sections of the optical carrier 510 that require more force to flex have different thresholds than other sections of the optical carrier 510 that require less force to flex.

While two phase difference thresholds are described in the above example for detecting force associated with a touch, any number of phase difference thresholds may be used based on the location on the touch-sensitive display 118 that is touched. Additionally, the use of different thresholds based on touch location on the touch-sensitive display 118 is not limited to phase difference thresholds. That is, other types of thresholds, such as amplitude, energy, etc. may be used. As with the phase difference thresholds described above, different thresholds may be selected based on touch location.

Differences between the optical signals transmitted through the optical carrier 510 over time by taking samples that are utilized to determine whether force exerted on the touch-sensitive display 118 meets a threshold, which, as described above, may be selected based on the location on the touch-sensitive display on which a touch is detected. The difference between the optical signals may be a phase difference, which may be measured by a time between signal peaks or amplitude difference, which may be partially or totally reduced. For example, when an optical path is lengthened due to changes in the optical carrier 510 in which the optical path is located, the time for an optical signal to pass through the lengthened optical path changes the phase of an optical signal that is sinusoidal. The difference between the optical signals may be energy differences such as amplitude differences. For example, when an optical path is changed, causing the deflection of the light in the optical path to reflect in a manner that causes optical signals from the optical path to be diffused or absorbed, for example, in surrounding media, the energy or amplitude of the optical signal changes. The optical signal may comprise one or more pulses of one or more different durations, and a time difference in receipt of a pulse of the optical signal through the optical path of the optical carrier 510 and an optical signal through the reference optical path in a reference optical carrier 512 may be detected when the touch-sensitive display 118 is depressed.

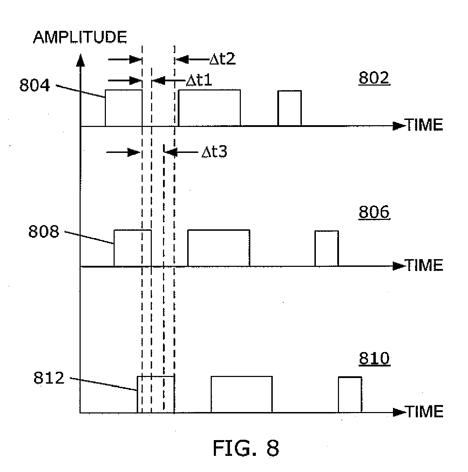

Signals at the optical detector(s) 508 are shown in FIG. 8. The optical emitter 506 directs one or more pulses of light along the optical carrier 510. The optical signals from the optical carrier 510 are received by one or more detectors 508 that may, for example, convert the optical signal from the carrier 510 into signals such as electrical signals that are provided to a processor for evaluation or analysis. The upper signal 802 is an optical signal from the optical carrier 510 when the touch-sensitive display 118 is not being depressed. The signal 802 includes three pulses of different durations, one pulse 804 is utilized for reference in the following example. Other types or durations of pulses may be utilized. The falling edge of the pulse 804 is a time reference from which one or more correlated pulses from the optical carrier 510 are measured. Correlated pulses may be two or more pulses having a same or similar shape, pulse width, relative position in a pulse train, and/or any other common feature. A comparison of signals may be utilized to identify the correlated pulses. Alternatively, measurements may be triggered off the rising edge or other aspect of the pulse 804.

The middle signal 806 is an optical signal from the optical carrier 510 when the touch-sensitive display 118 is depressed slightly in a particular location by force, but is not sufficiently depressed to register as full depression. That is, an aspect of the signal 806 has not exceeded a threshold to register as a full depression. In the example of FIG. 8, a falling edge of a pulse 808, which is correlated with the pulse 804, in the signal 806 occurs at a time that is Δt1 in time later than the falling edge of the pulse 804 of the reference signal 802.

When the touch-sensitive display 118 is depressed in a particular location of the touch-sensitive display 118, the optical path through the optical carrier 510 changes, resulting in the lower optical signal 810. A falling edge of a pulse 812 of the signal 810 occurs at a time that is Δt2 in time after the falling edge of the pulse 804 of the signal 702. The time or phase difference or distortion between signals during which the touch-sensitive display 118 is not depressed and other signals from the optical carrier 510 may be utilized to determine whether the touch-sensitive display 118 is depressed. In this example, the time change between corresponding points of the reference optical signal and non-reference optical signal may be utilized to determine when the touch-sensitive display is depressed. For example, a threshold of Δt3 may be specified at a point in time beyond Δt1, such that the threshold of Δt3 corresponds to a distortion or delay signifying depression. When a corresponding point of a non-reference signal is delayed or distorted more than Δt3, the touch-sensitive display is determined to be depressed.

The threshold Δt3 may be adaptable or changeable over time to provide consistent detection of depression. Additionally, the threshold Δt3 may vary based on the location at which the touch is made on the screen. For example, if the touch is made near the supports 512 or 514, the threshold Δt3 may be relatively shorter because it is difficult to flex the touch-sensitive display 118 in such a location and, thus, for a given amount of force, the time or phase difference is smaller. Conversely, if the touch is made near the middle of the touch-sensitive display 118, which is a relatively flexible section, the threshold Δt3 may be set to a longer delay because for that same amount of force, the time or phase difference is larger. The time or phase differences that are selected for thresholds for different sections of the display may be determined empirically or may be calculated and may be stored in a memory such that the threshold is obtained when a touch is detected.

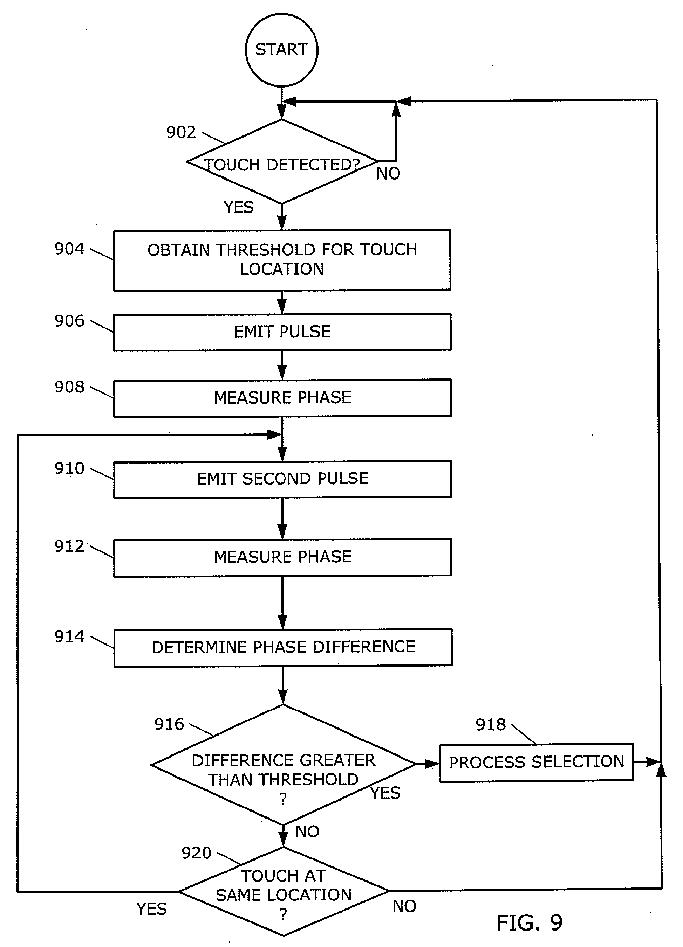

A flowchart illustrating a method of detecting force exerted on, or depression of, a touch-sensitive display of a mobile device is shown in FIG. 9. The method may be carried out by software executed by, for example, the processor 102. Coding of software for carrying out such a method is within the scope of a person of ordinary skill in the art given the present description. The method may contain additional or fewer processes than shown and/or described and may be performed in a different order. Computer-readable code executable by at least one processor of the portable electronic device to perform the method may be stored in a computer-readable medium.

In one example, a touch is detected 902, and a threshold difference for the location of the detected touch is obtained 904. The threshold may be a target phase difference. A pulse is sent into the one or more optical carriers 906. The one or more optical emitters and one or more of the optical emitters 506 may be enabled while the portable electronic device is enabled or activated when the portable electronic device 100 is powered up or when selection options are displayed to save energy.

The optical signal propagates though the optical carrier(s) along optical paths to one or more optical detectors. The optical signals are evaluated or analyzed to determine a phase for the pulse 908. The evaluation of the optical signals may be carried out after the optical signals are converted from optical signals into other signals that are more easily evaluated, such as electrical signals, by one or more optical detectors 508. The evaluation may be carried out by a processor or other suitable logic device configured to process electrical signals. The optical signals may be evaluated in a number of different ways to determine whether depression of the touch-sensitive display is detected, including phase or amplitude evaluations.

An additional pulse is sent 910 and a phase for that pulse is determined for the additional pulse 912. A difference between the phase of the first pulse and the second pulse is determined 914.

The phase difference is compared to the maximum allowable phase difference 916. When the comparison signifies that a depression has occurred 916, the selection option associated with the location of the touch is processed 918, and the process continues at 902.

When the comparisonsignifies has not occurred 916, it is determined whether the screen is still touched in the same location 920. If the screen is not still touched in the same location, the process restarts at 902. If, however, the screen is still touched, an additional pulse is sent 910 and the process continues to compare differences between phase or amplitude differences as described above.

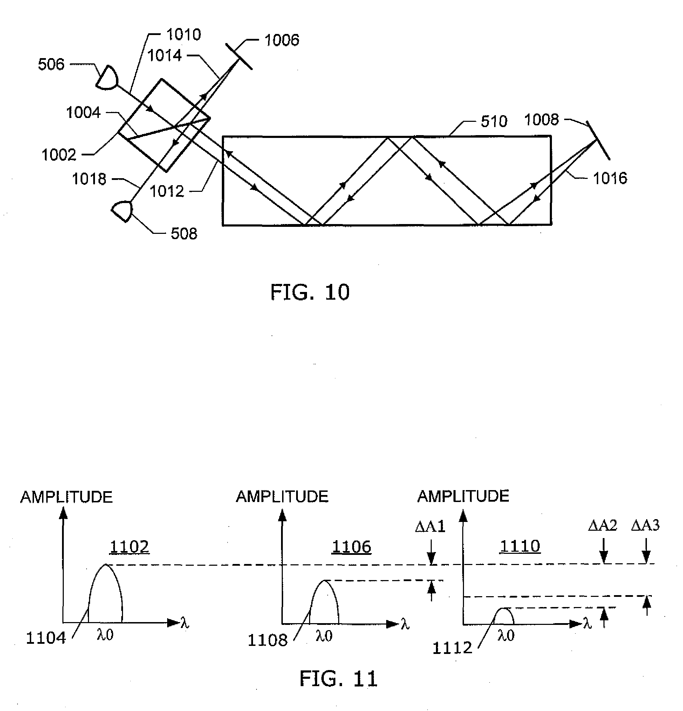

FIG. 10 shows an alternative configuration that may be used to detect force exerted on the touch-sensitive display screen 118 utilizing optical energy. The example of FIG. 10 uses an interferometer configuration to measure phase differences of optical energy passed through the touch-sensitive display 118. The configuration of FIG. 10 includes an optical emitter 506 and an optical detector 508, as well as a reflector 1002 including a beam splitter, or half-silvered mirror 1004 and mirrors 1006, 1008.

The optical emitter 506 provides an optical signal 1010 to the reflector 1002 and the beam splitter 1004 of the reflector 1002. The beam splitter 1004 passes a portion of the optical signal to the optical carrier 510, as shown at reference number 1012, and reflects a portion of the optical signal to the mirror 1006, as shown at reference number 1014. The optical signal provided to the optical carrier 510, which may be a portion of the touch-sensitive display 118, propagates through the optical carrier 510 to the mirror 1008 and reflects back into the optical carrier, as shown at reference number 1016. The reflected optical signal 1016 from the mirror 1008 propagates to the beam splitter 1004, which combines the reflected optical signal 1016 with a reflection of the optical signal 1014 that was provided to the mirror 1006. The combination of the signal from the mirror 1006 and the reflected signal 1016 is shown at reference number 1018. The combined signal 1018 is provided to the detector 508.

Any phase difference between the signal reflected from the mirror 1006 and the signal reflected from the mirror 1008 results in a change in intensity of the combined signal 1018. Measuring the intensity of the combined signal over time enables detection of force imparted on the touch-sensitive display 118 because, as described above, force on the touch-sensitive display 118 affects the phase of the optical signals propagating through the touch-sensitive display 118. This technique for determining phase differences, which is insensitive to frequency differences in the optical signal, is referred to as homodyne detection. As described below, a comparison of the signal intensity as the detector 508 to one or more thresholds may be utilized to determine if force is exerted on the touch-sensitive display 118. As explained above, any number of thresholds may be used and may be selected based on a location at which a touch on the touch-sensitive display 118 is detected.

While the reflector 1002, the mirror 1006, and the mirror 1008 are shown as separate elements from the optical carrier 510 in FIG. 10, FIG. 10 is one example of numerous possible configurations of these components. For example, the mirror 1008 could be fabricated as part of the optical carrier 510 by silvering an edge of the optical carrier 510, or through the use of any other technique.

FIG. 11 shows an example of the signals that may be received at the detector 508 of FIG. 10, wherein such signals have amplitudes that vary as a function of the force exerted on the touch-sensitive display 118. The optical signals are received by one or more detectors 508 that may, for example, convert the optical signal into signals such as electrical signals that are provided to a processor for evaluation or analysis. The left signal 1102 is an optical signal received at the detector 508 when no force is applied to the touch-sensitive display 118. The left signal 1102 includes one pulse 1104, which serves as a reference pulse, centered at a wavelength λ0 and having an amplitude that is a reference from which one or more correlated pulses from the optical carrier 510 are measured. Correlated pulses may be two or more pulses having a same or similar shape, pulse width, relative position in a pulse train, wavelength, and/or any other common feature. A comparison of signals may be utilized to identify the correlated pulses among the signals.

The middle signal 1106 is an optical signal output from the optical carrier 510 when force is being exerted on the touch-sensitive display 118 so that a pulse 1108 has a lower amplitude than the pulse 1104. The signal 1106 signifies that the touch-sensitive display 118 is not depressed because an amplitude of the pulse 1108, which is correlated with the pulse 1104 has an amplitude ΔA1 lower than the amplitude of the pulse 1104, but that amplitude difference is determined to be insufficient to declare that force has been exerted on the touch-sensitive display 118.

When the touch-sensitive display 118 is depressed, the optical path through the optical carrier 510 changes, resulting in the optical signal 1110 shown on the right. In this example, the touch-sensitive display 118 moved sufficiently to change the phase through the optical carrier 510. The amplitude of the pulse 1112 is ΔA2 lower than the amplitude of the pulse 1104 of the reference signal 1102. The amplitude difference or distortion between the reference pulse 1104 and the pulse 1112 may be utilized to determine whether the touch-sensitive display 118 is depressed. In this example, the amplitude change between the reference optical signal and non-reference optical signal may be utilized to determine when the touch-sensitive display 118 is depressed. For example, a threshold of ΔA3 may be specified at an amplitude more than ΔA1 below the amplitude of the reference pulse 1104, such that the threshold of ΔA3 corresponds to an amplitude change signifying depression. When an amplitude of a non-reference signal is changed or distorted more than ΔA3 below the reference pulse 1104, the touch-sensitive display 118 is determined to be depressed. The threshold ΔA3 may be modified in general or over time to provide consistent detection of depression, e.g., as the device 100 changes, for example, due to age or other factors.

Additionally, the threshold ΔA3 may be different based on different locations on which the touch-sensitive display 118 is touched. For example, touches near the middle of the touch-sensitive display 118 may be evaluated against a large value of ΔA3, whereas touches near an end of the touch-sensitive display 118, a section that is less flexible, may be evaluated against a small value of ΔA3. In this manner, a larger amplitude change is required to register as a depression when the touch is made near the middle of the touch-sensitive display 118, as opposed to smaller amplitude changes that are required to register as depression in a relatively inflexible section of the touch-sensitive display 118.

The depression sensor 502 , which may be an optical depression sensor, of FIG. 5 or FIG. 10 may be disposed, for example, between the touch-sensitive display 118 and the base 210. The depression sensor 502 may be disposed between other components of the portable electronic device 100. For example, the optical depression sensor 502 may be disposed between the display 112 and the support tray 212, between the overlay 114 and the display 112, or in any other suitable location.

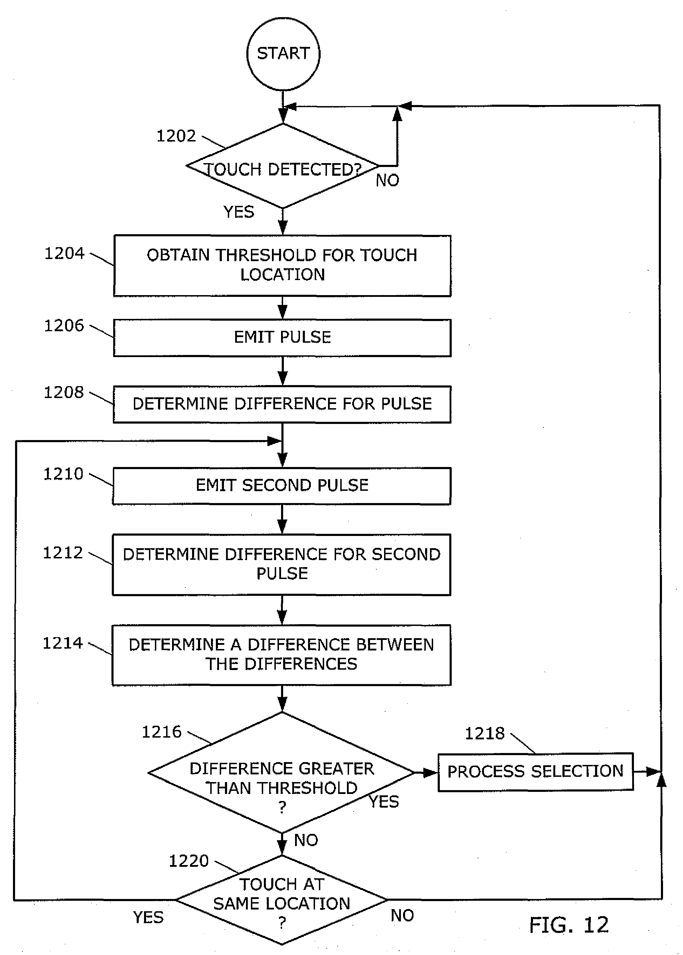

A flowchart illustrating a method of detecting force exerted on, or depression of, a touch-sensitive display of a mobile device is shown in FIG. 12. The method may be carried out by software executed by, for example, the processor 102. Coding of software for carrying out such a method is within the scope of a person of ordinary skill in the art given the present description. The method may contain additional or fewer processes than shown and/or described and may be performed in a different order. Computer-readable code executable by at least one processor of the portable electronic device to perform the method may be stored in a computer-readable medium.

In one example, a touch is detected 1202 and a threshold difference for the location of the detected touch is obtained 1204. A pulse is sent into the one or more optical carriers 1206. The one or more optical emitters and one or more of the optical emitters 506 may be enabled while the portable electronic device is enabled or activated when the portable electronic device 100 is powered up or when selection options are displayed to save energy. The optical emitters 506 direct the optical signals into the optical carrier, e.g., the optical carrier shown in FIG. 5, FIG. 6, FIG. 7, or FIG. 10.

The optical signal propagate though the optical carrier(s) along optical paths to one or more optical detectors. The optical signals are evaluated or analyzed to determine a phase or amplitude difference for the pulse 1208. The evaluation of the optical signals may be carried out after the optical signals are converted from optical signals into other signals that are more easily evaluated, such as electrical signals, by one or more optical detectors 508. The evaluation may be carried out by a processor or other suitable logic device configured to process electrical signals. The optical signals may be evaluated in a number of different ways to determine whether depression of the touch-sensitive display is detected, including phase or amplitude evaluations.

An additional pulse is sent 1210 and a phase or amplitude difference for that pulse is determined for the additional pulse 1212. A difference between the phase or amplitude differences is determined 1214.

The difference of phase or amplitude differences is compared to the maximum allowable phase or amplitude difference 1216. When the comparison signifies that a depression has occurred 1216, the selection option associated with the location of the touch is processed 1218, and the process continues at 1202.

When the comparison signifies that a depression has not occurred 1216, it is determined whether the screen is still touched in the same location 1220. If the screen is not still touched in the same location, the process restarts at 1202. If, however, the screen is still touched, an additional pulse is sent 1210 and the process continues to compare differences between phase or amplitude differences as described above.

Through the use of one or more techniques described herein, depression of a movable touch-sensitive display may be detected without the use of strain gauges or other mechanical techniques. The optical techniques described herein have thin implementations and facilitate reduced overall device size. The use of optical techniques does not require components to be physically attached to the touch-sensitive display to detect depression. The use of optical technology over strain gauges and other technology facilitates the depression detection system to be more resistant to liquid and corrosion than other depression detection systems, such as electronic detection systems. The example approaches described have relatively wide tolerance ranges and high manufacturing yield. User experience with the portable electronic device is enhanced, e.g., by more reliable selection and tactile feedback. Because the techniques described utilize a difference between signals, accounting for loss of transmission or reduced light transmittance as the user device ages is not necessary.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A device comprising:
a touch-sensitive display having a first location associated with a first threshold and a second location associated with a second threshold;
a sensor configured to detect depression of the touch-sensitive display by detecting a force exerted at a location on the touch-sensitive display, wherein the force exerted effects a characteristic of an optical signal, wherein the characteristic is compared to the first threshold when the force is exerted in the first location, and wherein the characteristic is compared to the second threshold when the force is exerted in the second location.

2. The device of claim 1, wherein the first location comprises a location in which the touch-sensitive display flexes a first amount in response to a first force.

3. The device of claim 1, wherein the second location a location in which the touch-sensitive display flexes a second amount different from the first amount in response to the first force.

4. The device of claim 1, wherein the characteristic is a change in phase of the optical signal.

5. The device of claim 4, wherein the force exerted on the touch-sensitive display affects the optical path.

6. The device of claim 5, wherein the second threshold comprises change in phase of the optical signal in the optical path and wherein the second threshold represents a larger change in phase than the first threshold.

7. The device of claim 1, wherein the affect on the optical path is a changes in amplitude of an optical signal output from the optical path.

8. The device of claim 1, wherein an optical path of the optical signal is within the touch-sensitive display.

9. A portable electronic device comprising the device of claim 1.

10. A method comprising:
detecting a touch at a first location on a touch-sensitive display;
associating one of a first threshold and a second threshold with the location of the touch;
emitting an optical signal toward the touch-sensitive display;
determining a phase difference between two samples of the optical signal;
when the phase difference meets the threshold, processing the touch as a selection.

11. The method of claim 10, wherein the obtaining the threshold comprises selecting the threshold from a plurality of thresholds based on the location of the touch.

12. The method of claim 10, wherein determining the phase difference comprises comparing the phase difference to a second phase difference.

13. The method of claim 12, wherein comparing the phase difference to the second phase difference is performed prior to the comparison to the threshold.

## Amended claims

### Amended claims in accordance with Rule 137(2) EPC.

**1.** A device (100) comprising:
a touch-sensitive display (118) configured to provide touch location data;
a sensor configured to detect depression of the touch-sensitive display by detecting a force exerted at a location on the touch-sensitive display, wherein the force exerted affects a characteristic of an optical signal, wherein the characteristic is compared to a first threshold when the force is exerted at a first location, wherein the characteristic is compared to a second threshold when the force is exerted at a second location, and wherein at least one of the first threshold and the second threshold is selected based on the touch location data.

**2.** The device (100) of claim 1, wherein the first location comprises a location in which the touch-sensitive display flexes a first amount in response to a first force.

**3.** The device (100) of claim 1, wherein the second location a location in which the touch-sensitive display flexes a second amount different from the first amount in response to the first force.

**4.** The device (100) of claim 1, wherein the characteristic is a change in phase of the optical signal.

**5.** The device (100) of claim 4, wherein the force exerted on the touch-sensitive display affects the optical path.

**6.** The device (100) of claim 5, wherein the second threshold comprises change in phase of the optical signal in the optical path and wherein the second threshold represents a larger change in phase than the first threshold.

**7.** The device (100) of claim 1, wherein the affect on the optical path is a change in amplitude of an optical signal output from the optical path.

**8.** The device (100) of claim 1, wherein an optical path of the optical signal is within the touch-sensitive display.

**9.** A portable electronic device comprising the device (100) of claim 1.

**10.** A method comprising:
detecting a touch at one of a first location and a second location on a touch-sensitive display (118) associated with a first threshold and a second threshold respectively;
emitting an optical signal toward the touch-sensitive display;
determining a phase difference between two samples of the optical signal;
when the phase difference meets the selected threshold, processing the touch as a selection.

**11.** The method of claim 10, wherein the obtaining the threshold comprises selecting the threshold from a plurality of thresholds based on the location of the touch.

**12.** The method of claim 10, wherein determining the phase difference comprises comparing the phase difference to a second phase difference.

**13.** The method of claim 12, wherein comparing the phase difference to the second phase difference is performed prior to the comparison to the threshold.
